(19) Europäisches Patentamt
European Patent Office
Office européen des brevets

(11) **EP 3 854 573 B1**

(12) **EUROPEAN PATENT SPECIFICATION**

(45) Date of publication and mention
of the grant of the patent:
**26.10.2022 Bulletin 2022/43**

(51) International Patent Classification (IPC):
**B29D 30/06** *(2006.01)* **B29D 30/08** *(2006.01)*

(21) Application number: **20217498.3**

(52) Cooperative Patent Classification (CPC):
**B29D 30/0681; B29D 30/08;** B29D 2030/0682

(22) Date of filing: **29.12.2020**

(54) **TIRE PRODUCTION METHOD AND GREEN TIRE**

REIFENHERSTELLUNGSVERFAHREN UND GRÜNER REIFEN

PROCÉDÉ DE PRODUCTION DE PNEU ET PNEU CRU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.01.2020 JP 2020008624**

(43) Date of publication of application:
**28.07.2021 Bulletin 2021/30**

(73) Proprietor: **Sumitomo Rubber Industries, Ltd.
Kobe-shi, Hyogo-ken 651-0072 (JP)**

(72) Inventor: **WATANABE, Takuma
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**WO-A1-2012/106027 JP-A- H0 732 813
JP-A- H09 239 861**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a tire production method and a green tire.

Description of the Background Art

Japanese Laid-Open Patent Publication No. H7-32813 discloses an unvulcanized green tire having an air-impermeable inner liner. The inner liner is configured such that the average thickness T1 of the middle portion of the crown, the average thickness T2 of a portion extending over a part of the sidewall portion from the shoulder portion, and the average thickness T3 of the remaining part of the sidewall portion satisfy the following formulas (1) and (2).

$$T2 = 1.3 \times T1 \text{ to } 2.2 \times T1 \qquad (1)$$

$$T3 = 0.8 \times T1 \text{ to } 1.0 \times T1 \qquad (2)$$

For such a green tire, it is considered that when vulcanization is performed with a bladder pressed against the inner liner, the inner liner will have a uniform thickness.

Typically, a belt layer having high stiffness is provided in the tread portion of a tire. The present inventors have found that when a green tire is pressed by a bladder from the tire inner cavity side, there is a difference in the deformation amount of the bladder between where the belt layer is provided and where the belt layer is not provided. In the invention disclosed in Japanese Laid-Open Patent Publication No. H7-32813, the belt layer, which poses such a problem, is not taken into account, and therefore, there is room for consideration regarding making the thickness of the inner liner uniform.

The present invention has been made in view of the above circumstances, and an object of the present invention is to provide a tire production method and green tire that allow the thickness of an inner liner to be made uniform.

SUMMARY OF THE INVENTION

The present invention is directed to a tire production method including a forming step of forming a green tire including an inner liner extending toroidally between a pair of bead portions, and a belt layer disposed outward of the inner liner in a tire radial direction and in a tread portion, and a vulcanization step of pressing the green tire by a bladder from a tire inner cavity side to obtain a vulcanized tire. In the forming step, the inner liner includes a base portion, and a pair of thick portions having a thickness larger than that of the base portion, and the green tire is formed such that the pair of thick portions do not overlap with the belt layer in a tire radial-ply direction.

In the tire production method of the present invention, in the green tire, the pair of thick portions are preferably located at a pair of shoulder portions, respectively, of the vulcanized tire.

In the tire production method of the present invention, in the green tire, the pair of thick portions are preferably located outward of respective tire maximum width positions of the vulcanized tire in the tire radial direction.

In the tire production method of the present invention, the inner liner preferably includes a first rubber sheet and a second rubber sheet attached to the first rubber sheet, the first rubber sheet preferably forms the base portion, and a portion in which the first rubber sheet and the second rubber sheet are attached together preferably forms each thick portion.

In the tire production method of the present invention, the first rubber sheet preferably has a thickness of 1.0 to 1.5 mm.

In the tire production method of the present invention, the second rubber sheet preferably has a thickness of 0.8 to 2.0 mm.

In the tire production method of the present invention, the second rubber sheet preferably has an overlap portion in which end portions thereof in a tire circumferential direction are put on top of each other, and a length in the tire circumferential direction of the overlap portion preferably corresponds to 30 degrees or less around a center of rotation of the green tire.

In the tire production method of the present invention, the overlap portion is preferably located ±10 degrees away from a light point of the green tire in the tire circumferential direction.

The present invention is also directed to an unvulcanized green tire including an inner liner extending toroidally between a pair of bead portions, and a belt layer disposed outward of the inner liner in a tire radial direction and in a tread portion. The inner liner includes a base portion and a pair of thick portions having a thickness larger than that of the base portion, and the pair of thick portions are located so as not to overlap with the belt layer in a tire radial-ply direction.

In the tire production method of the present invention, in the forming step of forming a green tire, the inner liner includes a base portion and a pair of thick portions having a thickness larger than that of the base portion, and the pair of thick portions do not overlap with the belt layer in a tire radial-ply direction. Therefore, for a tire produced by the tire production method of the present invention, the pair of thick portions are stretched by the bladder more than the base portion in the vulcanization step, and therefore, the inner liner has a uniform thickness.

In the green tire of the present invention, the inner liner includes a base portion and a pair of thick portions having a thickness larger than that of the base portion, and the pair of thick portions are located so as to not overlap with the belt layer in a tire radial-ply direction. For such a tire, when the tire is pressed by the bladder from the tire inner cavity side, the pair of thick portions will be stretched more than the base portion. Therefore, when the green tire of the present invention is vulcanized, the inner liner will have a uniform thickness.

BRIEF DESCRIPTION OF THE DRAWINGS

FIG. 1 is a cross-sectional view of a tire produced by a tire production method according to the present invention;
FIGS. 2(a) and 2(b) are a plan view and a cross-sectional view, respectively, of a forming drum for describing a forming step of the present invention;
FIG. 3 is a cross-sectional view of a first formed body for describing a forming step of the present invention;
FIG. 4 is a tire meridional cross-sectional view of a green tire;
FIG. 5 is a cross-sectional view of the green tire taken along a circumferential direction thereof;
FIG. 6 is a cross-sectional view for describing a vulcanization step of the present invention; and
FIG. 7 is a plan view of a forming drum for describing a forming step of another embodiment of the present invention.

DESCRIPTION OF THE PREFERRED EMBODIMENTS

Hereinafter, an embodiment of the present invention will be described with reference to the drawings.

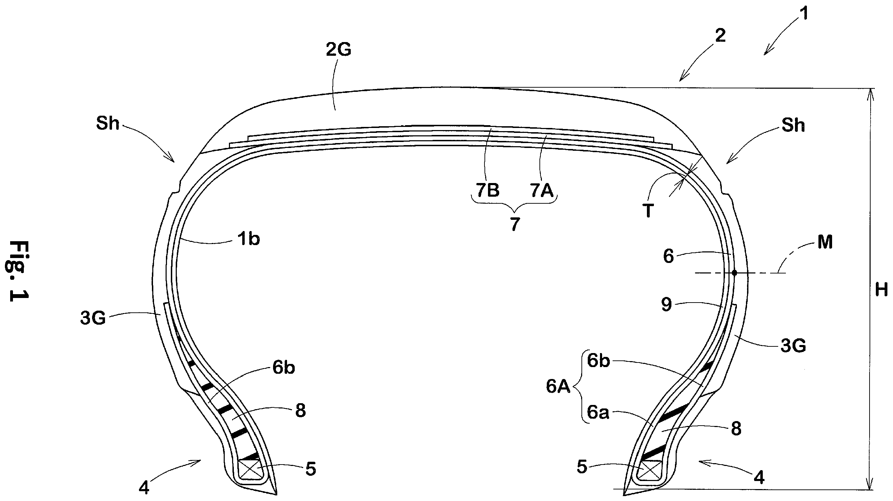

FIG. 1 is a tire meridional cross-sectional view of a tire 1 produced by a tire production method (hereinafter, sometimes referred to simply as a "production method") according to the present embodiment. FIG. 1 shows a pneumatic tire for a passenger car. Note that the present invention is applicable to production methods for pneumatic tires for motorcycles, heavy-duty vehicles, etc., in addition to passenger cars.

As shown in FIG. 1, the tire 1 of the present embodiment includes an inner liner 9 which extends toroidally between a pair of bead portions 4, and a belt layer 7 which is disposed outward of the inner liner 9 in the tire radial direction and in a tread portion 2. The tire 1 also includes, for example, a tread rubber 2G, a side wall rubber 3G, a bead core 5, a carcass 6, a bead apex rubber 8, etc.

The carcass 6 is, for example, formed by a well-known carcass ply 6A including a body portion 6a extending between the bead cores 5, and a pair of turned-up portions 6b connected to the body portion 6a. As the tread rubber 2G, the side wall rubber 3G, the bead core 5, and the bead apex rubber 8, those having a well-known structure are employed, as appropriate, for example.

The belt layer 7 of the present embodiment is formed by two belt plies 7A and 7B which are an inner and an outer belt ply arranged in the tire radial direction. In the belt layer 7 of the present embodiment, the inner belt ply 7A is formed so as to have a larger length in the tire axial direction than that of the outer belt ply 7B. The belt plies 7A and 7B each have, for example, steel cords arranged at an angle of 45 to 75° with respect to the tire circumferential direction. Note that the belt plies 7A and 7B are not limited to such an embodiment.

The inner liner 9 of the present embodiment is formed from a rubber having excellent air impermeability. The inner liner 9 is, for example, located inward of the carcass 6 in the tire radial direction to form a tire inner cavity surface 1b.

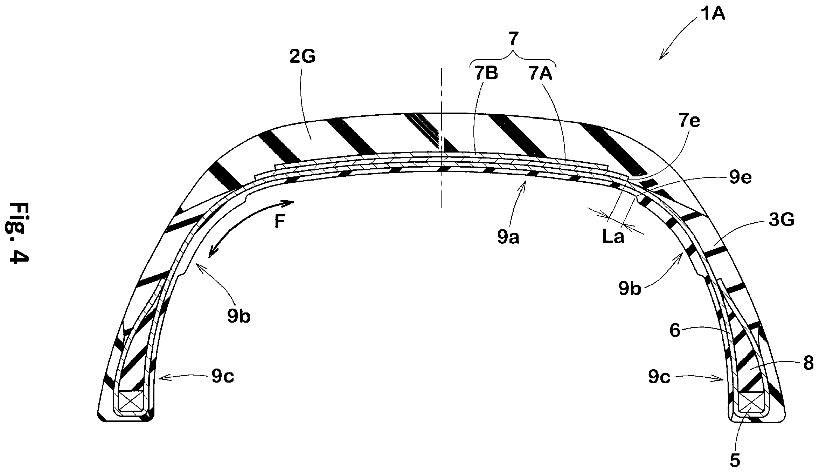

Next, a production method for the tire 1 will be described. The production method of the present embodiment includes a forming step S1 of forming an unvulcanized green tire 1A (shown in FIG. 4), and a vulcanization step S2 of vulcanizing the green tire 1A to obtain a vulcanized tire (tire) 1. Here, the term "unvulcanized" encompasses all states in which vulcanization is not completed, and a so-called half-vulcanized state is among "unvulcanized" states.

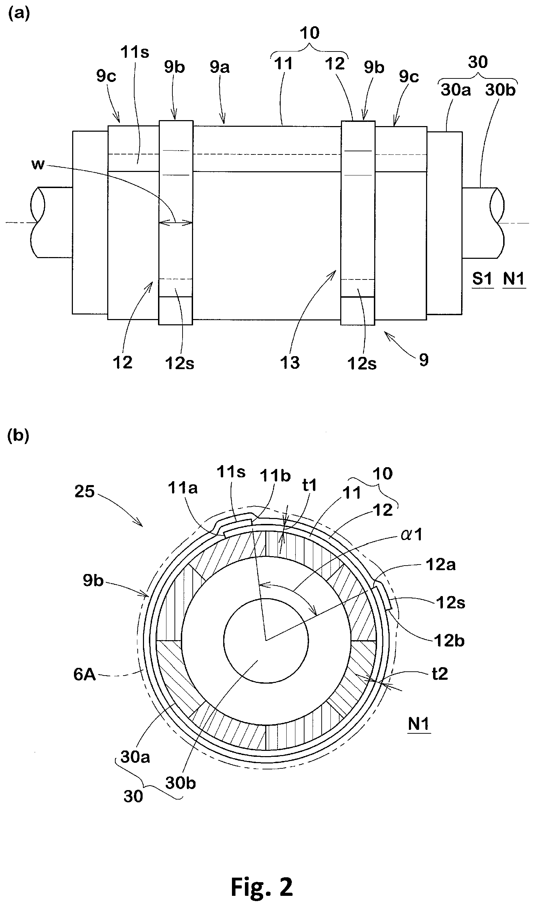

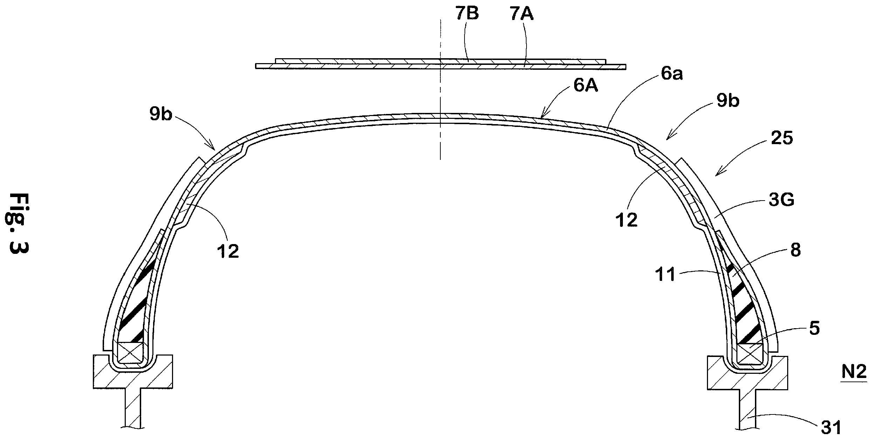

The forming step S1 of the present embodiment includes a first step N1 of wrapping the inner liner 9 around a forming drum 30 to form a first formed body 25 (shown in FIG. 2), and a second step N2 of attaching the belt layer 7 to the first formed body 25 to form the green tire 1A (shown in FIG. 3).

FIG. 2(a) is a plan view of the forming drum 30, and FIG. 2(b) is a cross-sectional view of the forming drum 30. As shown in FIGS. 2(a) and 2(b), the forming drum 30 has, for example, a well-known cylindrical structure having a wrapping surface 30a on which the inner liner 9 is wrapped, and a rotatable support shaft 30b which supports the wrapping surface 30a.

In the first step N1, initially, a rubber sheet 10 which forms the inner liner 9 is wrapped. The rubber sheet 10 of the present embodiment includes a first rubber sheet 11, and a second rubber sheet 12 attached to the first rubber sheet 11. The second rubber sheet 12 has, for example, a width (a length in the axial direction of the forming drum 30) w smaller than that of the first rubber sheet 11.

The first rubber sheet 11 is formed from, for example, a butyl-based rubber having excellent air impermeability. The second rubber sheet 12 is preferably formed from, for example, a rubber including a compound that has suitable rubber strength, reversion resistance, crack growth resistance, tear strength, and cord adhesion properties. Note that the second rubber sheet 12 may be formed from the same rubber as that of the first rubber sheet 11.

In the first step N1 of the present embodiment, initially, the first rubber sheet 11 is wrapped on the wrapping surface 30a of the forming drum 30. In the present embodiment, the first rubber sheet 11 includes an overlap portion 11s in which a wrapping starting end portion 11a and a wrapping terminating end portion 11b are put on top of each other in the radial direction of the forming drum 30. As a result, in the present embodiment, the first rubber sheet 11 is formed in a cylindrical shape. The wrapping starting end portion 11a and the wrapping terminating end portion 11b together form an end portion in the tire circumferential direction.

Next, the second rubber sheet 12 is wrapped on the first rubber sheet 11. In the present embodiment, two second rubber sheets 12 are used. In the present embodiment, the second rubber sheets 12 are wrapped so as to be spaced from each other in the axial direction of the forming drum 30. As a result, the inner liner 9 of the present embodiment includes a base portion 9a which is located between the second rubber sheets 12 and is formed only by the first rubber sheet 11, and a pair of thick portions 9b and 9b each of which is formed as an attachment portion 13 in which the first rubber sheet 11 and the second rubber sheet 12 are attached together. The inner liner 9 of the present embodiment includes a pair of outer portions 9c which are located outward of the second rubber sheets 12 in the axial direction of the forming drum 30 and are formed only by the first rubber sheet 11. The outer portions 9c have, for example, the same thickness as that of the base portion 9a. Note that the outer portions 9c are not limited to such an embodiment.

The second rubber sheet 12 includes an overlap portion 12s in which a wrapping starting end portion 12a and a wrapping terminating end portion 12b are put on top of each other in the radial direction of the forming drum 30. The wrapping starting end portion 12a and the wrapping terminating end portion 12b together form an end portion in the tire circumferential direction. In addition, the overlap portion 11s of the first rubber sheet 11 and the overlap portion 12s of the second rubber sheet 12 are preferably formed at different positions in the circumferential direction of the forming drum 30. As a result, the inner liner 9 before vulcanization is inhibited from having an excessive thickness at the overlap portion 12s, and therefore, in the vulcanized tire 1, the inner liner 9 can have a uniform thickness T (shown in FIG. 1).

An angle $\alpha1$ between the overlap portion 11s of the first rubber sheet 11 and the overlap portion 12s of the second rubber sheet 12 in the circumferential direction of the forming drum 30 is, for example, but not limited to, preferably not less than 30 degrees, more preferably not less than 60 degrees, and even more preferably not less than 90 degrees.

The first rubber sheet 11 preferably has a thickness t1 of 1.0 to 1.5 mm. The first rubber sheet 11 thus configured serves to inhibit the transparency (called "open thread") of the carcass 6 to maintain the air impermeability of the tire 1 while reducing the mass of the tire 1. The tire 1 having a reduced mass has excellent rolling resistance. The second rubber sheet 12 preferably has a thickness t2 of 0.8 to 2.0 mm. The second rubber sheet 12 thus configured serves to ensure the thickness (t1 + t2) of the thick portions 9b to maintain the air impermeability of the inner liner 9 extended due to vulcanization. In addition, the second rubber sheet 12 having the thickness t2 inhibits air from being retained at and near the overlap portion 12s.

The width w of the second rubber sheet 12 is, but not limited to, preferably not less than 5%, more preferably not less than 7%, and even more preferably not less than 10% of a tire cross-sectional height (shown in FIG. 1) H of the vulcanized tire 1. The width w of the second rubber sheet 12 is preferably not greater than 70%, more preferably not greater than 50%, and even more preferably not greater than 20% of the tire cross-sectional height H of the vulcanized tire 1.

In the first step N1 of the present embodiment, next, the carcass ply 6A is wrapped on the outer side of the inner liner 9. Note that in the first step N1, for example, the side wall rubber 3G, the bead apex rubber 8, and the bead core 5 (shown in FIG. 3) are further placed on the outer side of the carcass ply 6A. Thus, in the first step N1, the cylindrical first formed body 25 is formed. In the present embodiment, the first formed body 25 is toroidally expanded using a shaping device 31 having a well-known structure.

FIG. 3 is a cross-sectional view of the first formed body 25 for describing the second step N2. As shown in FIG. 3, in the second step N2 of the present embodiment, the belt plies 7A and 7B are attached to the first formed body 25 expanded toroidally. In the present embodiment, the belt plies 7A and 7B are placed so as not to overlap with the pair of thick portions 9b and 9b in a tire radial-ply direction F. As used herein, the "tire radial-ply direction F" refers to a direction along the body portion 6a of the carcass ply 6A as indicated by an arrow in FIG. 4. The "not overlap" means that the belt plies 7A and 7B do not overlap with the thick portions 9b in a direction perpendicular to the tire radial-ply direction F.

In addition, in the second step N2, for example, a tread rubber 2G having a well-known structure (shown in FIG. 4) is attached to the outer side of the belt plies 7A and 7B. Thus, the cylindrical green tire 1A is formed.

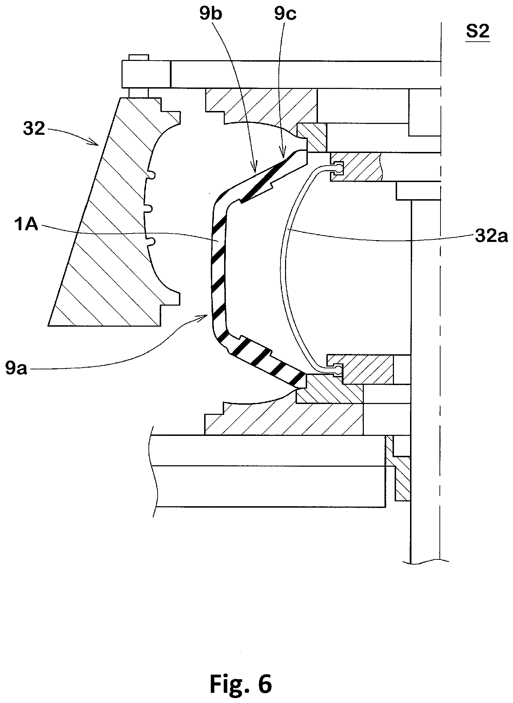

FIG. 4 is a tire meridional cross-sectional view of the green tire 1A formed in the forming step S1, taken along the center of rotation (not shown) of the green tire 1A. As shown in FIG. 4, in the green tire 1A, the thick portions 9b are preferably located at respective shoulder portions Sh (shown in FIG. 1) of the vulcanized tire 1. When the green tire 1A is pressed by a bladder 32a (shown in FIG. 6) from the tire inner cavity side in the vulcanization step S2, the bladder 32a will be deformed most at the shoulder portions Sh. Therefore, by providing the thick portions 9b at the shoulder portions Sh, the inner liner 9 is caused to have a more uniform thickness T.

In the green tire 1A, the thick portions 9b are preferably located outward of respective tire maximum width positions M (shown in FIG. 1) of the tire 1 in the tire radial direction. Typically, the portion of the bladder 32a that is located inward of the tire maximum width position M in the tire radial direction is inhibited from being deformed. As a result, the above action is more effectively exerted.

At each tire maximum width position M, the body portion 6a of the carcass ply 6A protrudes most outward in the tire axial direction in the tire 1 in a normal state. The "normal state" is a state where the tire 1 is mounted on a normal rim (not shown) and inflated to a normal internal pressure and no load is applied to the tire 1.

The "normal rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

In the green tire 1A, the length La in the tire radial-ply direction F between an inner end 9e of the thick portion 9b in the tire axial direction and an outer end 7e of the belt layer 7 (the belt ply 7A thereof) is preferably not greater than 10 mm, more preferably not greater than 8 mm, and even more preferably not greater than 5 mm. It is sufficient that the length La is greater than 0 mm. As a result, at each shoulder portion Sh, at which the bladder 32a is significantly deformed, the thickness T of the inner liner 9 after vulcanization is inhibited from being excessively small, and therefore, the uniformity of the thickness T is ensured, and the air impermeability is maintained.

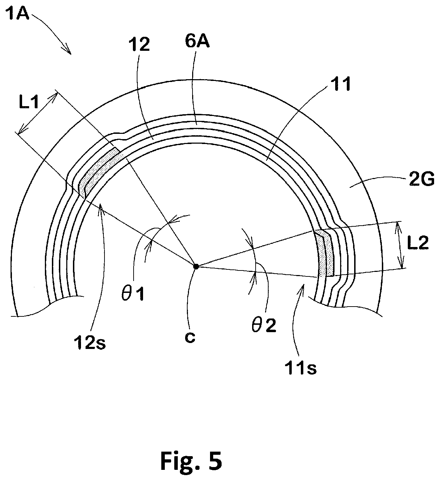

FIG. 5 is a schematic cross-sectional view of the green tire 1A, taken at the second rubber sheet 12 along the circumferential direction. As shown in FIG. 5, in the green tire 1A of the present embodiment, the length L1 in the tire circumferential direction of the overlap portion 12s of the second rubber sheet 12 preferably corresponds to an angle θ1 of not greater than 30 degrees, more preferably not greater than 27 degrees, and even more preferably not greater than 25 degrees around a center c of rotation of the green tire 1A. As a result, the length L1 in the circumferential direction of the overlap portion 12s, which has a large thickness, is maintained small, and therefore, a poor mass balance of the tire 1 in the circumferential direction is avoided. Note that if the length L1 in the tire circumferential direction of the overlap portion 12s is small, the second rubber sheet 12 may be separated in the tire circumferential direction. Therefore, the length L1 in the tire circumferential direction of the overlap portion 12s of the second rubber sheet 12 preferably corresponds to an angle θ1 of not less than 5 degrees, more preferably not less than 7 degrees, and even more preferably not less than 10 degrees around the center c of rotation of the green tire 1A. The tire 1 having a poor mass balance has, for example, an adverse influence on ride comfort and running stability.

From the same viewpoint, the length L2 in the tire circumferential direction of the overlap portion 11s of the first rubber sheet 11 preferably corresponds to an angle θ2 of not less than 5 degrees, more preferably not less than 7 degrees, and even more preferably not less than 10 degrees around the center c of rotation of the green tire 1A. The length L2 in the tire circumferential direction of the overlap portion 11s of the first rubber sheet 11 also preferably corresponds to an angle θ2 of not greater than 30 degrees, more preferably not greater than 27 degrees, and even more preferably not greater than 25 degrees around the center c of rotation of the green tire 1A. In FIG. 5, the overlap portions 11s and 12s are colored for clarity.

The overlap portion 12s of the second rubber sheet 12 is preferably located ±10 degrees away from a light point (not shown) of the green tire 1A in the tire circumferential direction (around the center c of rotation of the green tire 1A). As a result, the mass balance is further improved. The "light point" is a position where the green tire 1A has a lightest weight in the circumferential direction.

FIG. 6 is a cross-sectional view schematically showing the vulcanization step S2. As shown in FIG. 6, in the vulcanization step S2 of the present embodiment, a vulcanization mold 32 having a well-known structure and including a bladder 32a is used. The green tire 1A is pressed by the bladder 32a from the tire inner cavity side, so that the green tire 1A is vulcanized to form a vulcanized tire 1. Through such a vulcanization step S2, the tire (shown in FIG. 1) 1 including the inner liner 9 having a uniform thickness T is formed.

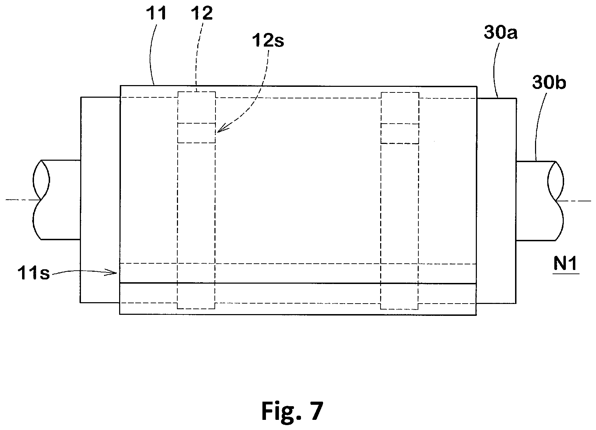

FIG. 7 is a plan view showing a production method of the first step N1 according to another embodiment. The same parts as those of the above embodiment are indicated by the same reference characters and will not be described. As shown in FIG. 7, in the first step N1 of the present embodiment, the first rubber sheet 11 is wrapped on the second rubber sheet 12 wrapped on the wrapping surface 30a and having a smaller width. Even in the case of such a first step N1, the inner liner 9 after vulcanization can have a uniform thickness T.

Although particularly preferable embodiments of the present invention have been described above in detail, the present invention is not limited to the illustrated embodiments, and various modifications can be made to implement the present invention. For example, a single rubber sheet (not shown) having a base portion 9a and a pair of thick portions 9b and 9b may be formed by extrusion molding, and may then be wrapped around the forming drum 30, to form the inner liner 9 of the green tire 1A.

EXAMPLES

Green tires having the basic structure in FIG. 4 were formed, and vulcanized tires (tires) were produced using the vulcanization device in FIG. 6. These tires were tested for uniformity, air impermeability, and mass balance. Test methods and common specifications are as follows.

Tire size: 265/75R16

In all of the examples, the thick portion is located outward of the tire maximum width position in the tire radial direction.

In all of the examples, the first rubber sheets have the same width, and the second rubber sheets have the same width.

The symbol "-" in the field "La" means that the thick portion and the belt layer overlap in the tire radial-ply direction.

<Uniformity>

The thickness of the inner liner was measured using a tester at 50-mm intervals in the tire circumferential direction and in the tire axial direction, and the average deviation thereof was calculated. The results are represented by indices with the average deviation of comparative example 1 being regarded as 100. The lower the value, the better the uniformity.

<Air Impermeability>

Each tire mounted on a normal rim and inflated to an internal pressure of 250 kPa was left in the ambient environment for 60 days. Thereafter, the internal pressure of the tire was measured, and a reduction rate of the internal pressure was calculated. The results were represented by indices with the internal pressure reduction rate of comparative example 1 being regarded 100. The lower the value, the better the air impermeability.

<Mass Balance>

A dynamic imbalance amount of each tire was measured using a well-known balancer. The results are represented by indices with the dynamic imbalance amount of comparative example 1 being regarded as 100. The lower the value, the better the mass balance.

[Table 1]

| | Comparative example 1 | Comparative example 2 | Example 1 | Example 2 | Example 3 | Example 4 | Example 5 | Example 6 |
|---|---|---|---|---|---|---|---|---|
| Thickness of first rubber sheet (mm) | 2.5 | 1.0 | 1.0 | 1.0 | 1.0 | 1.0 | 2.0 | 1.0 |
| Thickness of second rubber sheet (mm) | - | 2.0 | 2.0 | 1.0 | 0.5 | 2.5 | 1.0 | 2.0 |
| La (mm) | - | 3.0 | 1.0 | 1.0 | 1.0 | 1.0 | 1.0 | 1.0 |
| θ1 (degrees) | - | 27 | 27 | 27 | 27 | 27 | 27 | 40 |
| Uniformity [index: lower value is better] | 100 | 95 | 80 | 80 | 85 | 83 | 80 | 85 |
| Air impermeability [index: lower value is better] | 100 | 80 | 80 | 88 | 85 | 80 | 80 | 80 |
| Mass balance [index: lower value is better] | 100 | 80 | 80 | 80 | 80 | 85 | 85 | 85 |

It can be confirmed that the production methods of the examples provide better uniformity than that of the production methods of the comparative examples. It can also be confirmed that each of the tires of the examples includes an inner liner having a uniform thickness, and therefore, the tire has excellent air impermeability, and the mass of the tire is maintained small. It can also be confirmed that as the length ($\theta$1) of the overlap portion decreases, the uniformity is further improved. In addition, in the tire of Example 4, air remained at the overlap portion, which did not have an adverse influence on the quality of the tire.

**Claims**

1.  A tire production method comprising:

    a forming step (S1) of forming a green tire (1A) including an inner liner 9 extending toroidally between a pair of bead portions (4), and a belt layer (7) disposed outward of the inner liner (9) in a tire radial direction and in a tread portion (2); and
    a vulcanization step (S2) of pressing the green tire (1A) by a bladder 32a from a tire inner cavity side to obtain a vulcanized tire (1), wherein
    in the forming step (S1), the inner liner (9) includes a base portion (9a) and a pair of thick portions (9b) having a thickness larger than that of the base portion (9a), and **characterised in that** the green tire (1A) is formed such that the pair of thick portions (9b) do not overlap with the belt layer (7) in a tire radial-ply direction (F).

2.  The tire production method according to claim 1, wherein
    in the green tire (1A), the pair of thick portions (9b) are located at a pair of shoulder portions Sh, respectively, of the vulcanized tire (1).

3.  The tire production method according to claim 1 or 2, wherein
    in the green tire (1A), the pair of thick portions (9b) are located outward of respective tire maximum width positions of the vulcanized tire (1) in the tire radial direction.

4.  The tire production method according to any one of claims 1 to 3, wherein

    the inner liner (9) includes a first rubber sheet (11) and a second rubber sheet (12) attached to the first rubber sheet (11),
    the first rubber sheet (11) forms the base portion (9a), and
    a portion in which the first rubber sheet (11) and the second rubber sheet (12) are attached together forms each thick portion (9b).

5.  The tire production method according to claim 4, wherein
    the first rubber sheet (11) has a thickness of 1.0 to 1.5 mm.

6.  The tire production method according to claim 4 or 5, wherein
    the second rubber sheet (12) has a thickness of 0.8 to 2.0 mm.

7.  The tire production method according to any one of claims 4 to 6, wherein

    the second rubber sheet (12) has an overlap portion (12s) in which end portions (12a, 12b) thereof in a tire circumferential direction are put on top of each other, and
    a length (L1) in the tire circumferential direction of the overlap portion (12s) corresponds to 30 degrees or less around a center c of rotation of the green tire (1A).

8.  The tire production method according to claim 7, wherein
    the overlap portion (12s) is located ± 10 degrees away from a light point of the green tire (1A) in the tire circumferential direction.

9.  An unvulcanized green tire (1A) comprising an inner liner (9) extending toroidally between a pair of bead portions (4), and a belt layer (7) disposed outward of the inner liner (9) in a tire radial direction and in a tread portion (2), wherein

    the inner liner (9) includes a base portion (9a) and a pair of thick portions (9b) having a thickness larger than that of the base portion (9a), and **characterised in that**
the pair of thick portions (9b) are located so as not to overlap with the belt layer (7) in a tire radial-ply direction (F).

**Patentansprüche**

1. Reifenherstellungsverfahren, umfassend:

   einen Formungsschritt (S1) eines Formens eines Rohreifens (1A), der einen Innerliner (9), der sich toroidförmig zwischen einem Paar Wulstabschnitten (4) erstreckt, und eine Gürtelschicht (7) umfasst, die außerhalb des Innerliners (9) in einer radialen Richtung des Reifens und in einem Laufflächenabschnitt (2) angeordnet ist; und
   einen Vulkanisierungsschritt (S2) eines Pressens des Rohreifens (1A) durch einen Balg (32a) von einer Seite eines Reifeninnenhohlraums aus, um einen vulkanisierten Reifen (1) zu erhalten, wobei
   in dem Formungsschritt (S1) der Innerliner (9) einen Basisabschnitt (9a) und ein Paar dicker Abschnitte (9b) mit einer größeren Dicke als die des Basisabschnitts (9a) umfasst, und
   **dadurch gekennzeichnet, dass** der Rohreifen (1A) so geformt wird, dass das Paar dicker Abschnitte (9b) die Gürtelschicht (7) in einer Radiallagenrichtung (F) des Reifens nicht überlappt.

2. Reifenherstellungsverfahren nach Anspruch 1, wobei in dem Rohreifen (1A) das Paar dicker Abschnitte (9b) jeweils an einem Paar Schulterabschnitten Sh des vulkanisierten Reifens (1) angeordnet wird.

3. Reifenherstellungsverfahren nach Anspruch 1 oder 2, wobei in dem Rohreifen (1A) das Paar dicker Abschnitte (9b) außerhalb der jeweiligen Positionen der maximalen Reifenbreite des vulkanisierten Reifens (1) in der radialen Richtung des Reifens angeordnet wird.

4. Reifenherstellungsverfahren nach einem der Ansprüche 1 bis 3, wobei

   der Innerliner (9) eine erste Kautschukplatte (11) und eine zweite Kautschukplatte (12) umfasst, die an der ersten Kautschukplatte (11) befestigt wird,
   die erste Kautschukplatte (11) den Basisabschnitt (9a) bildet, und
   ein Abschnitt, in dem die erste Kautschukplatte (11) und die zweite Kautschukplatte (12) miteinander verbunden sind, jeden dicken Abschnitt (9b) bildet.

5. Reifenherstellungsverfahren nach Anspruch 4, wobei die erste Kautschukplatte (11) eine Dicke von 1,0 bis 1,5 mm aufweist.

6. Reifenherstellungsverfahren nach Anspruch 4 oder 5, wobei die zweite Kautschukplatte (12) eine Dicke von 0,8 bis 2,0 mm aufweist.

7. Reifenherstellungsverfahren nach einem der Ansprüche 4 bis 6, wobei

   die zweite Kautschukplatte (12) einen Überlappungsabschnitt (12s) aufweist, in dem ihre Endabschnitte (12a, 12b) in einer Umfangsrichtung des Reifens übereinander gelegt werden, und
   eine Länge (L1) des Überlappungsabschnitts (12s) in der Reifenumfangsrichtung 30 Grad oder weniger um einen Drehpunkt c des Rohreifens (1A) entspricht.

8. Reifenherstellungsverfahren nach Anspruch 7, wobei der Überlappungsabschnitt (12s) $\pm 10$ Grad von einem Leichtheitspunkt des Rohreifens (1A) in der Umfangsrichtung des Reifens entfernt ist.

9. Unvulkanisierter Rohreifen (1A), der einen Innerliner (9), der sich toroidförmig zwischen einem Paar Wulstabschnitten (4) erstreckt, und eine Gürtelschicht (7) umfasst, die außerhalb des Innerliners (9) in einer radialen Richtung des Reifens und in einem Laufflächenabschnitt (2) angeordnet ist,

   wobei der Innerliner (9) einen Basisabschnitt (9a) und ein Paar dicker Abschnitte (9b) mit einer größeren Dicke als die des Basisabschnitts (9a) umfasst, und **dadurch gekennzeichnet, dass**
   das Paar dicker Abschnitte (9b) so angeordnet ist, dass es die Gürtelschicht (7) in einer Radiallagenrichtung (F) des Reifens nicht überlappt.

**Revendications**

1. Procédé de production de pneumatique, comprenant :

    une étape de formage (S1) consistant à former un pneumatique vert (1A) incluant une doublure interne (9) s'étendant de manière toroïdale entre une paire de portions de talon (4), et une couche de ceinture (7) disposée à l'extérieur de la doublure interne (9) dans une direction radiale du pneumatique et dans une portion formant bande de roulement (2) ; et
    une étape de vulcanisation (S2) consistant à presser le pneumatique vert (1A) via une poche (32a) depuis un côté de cavité interne du pneumatique pour obtenir un pneumatique vulcanisé (1), dans lequel dans l'étape de formage (S1), la doublure interne (9) inclut une portion de base (9a) et une paire de portions épaisses (9b) ayant une épaisseur plus grande que celle de la portion de base (9a), et
    **caractérisé en ce que**
    le pneumatique vert (1A) est formé de telle sorte que la paire de portions épaisses (9b) ne se chevauchent pas avec la couche de ceinture (7) dans une direction de nappe radiale du pneumatique (F).

2. Procédé de production de pneumatique selon la revendication 1, dans lequel
    dans le pneumatique vert (1A), la paire de portions épaisses (9b) est située au niveau d'une paire de portions d'épaulement (Sh), respectivement, du pneumatique vulcanisé (1).

3. Procédé de production de pneumatique selon la revendication 1 ou 2, dans lequel
    dans le pneumatique vert (1A), la paire de portions épaisses (9b) est située à l'extérieur de positions de largeur maximum du pneumatique respectives du pneumatique vulcanisé (1) dans la direction radiale du pneumatique.

4. Procédé de production de pneumatique selon l'une quelconque des revendications 1 à 3, dans lequel

    la doublure interne (9) inclut une première feuille de caoutchouc (11) et une seconde feuille de caoutchouc (12) fixée à la première feuille de caoutchouc (11),
    la première feuille de caoutchouc (11) forme la portion de base (9a), et une portion dans laquelle la première feuille de caoutchouc (11) et la seconde feuille de caoutchouc (12) sont fixées conjointement forme chaque portion épaisse (9b).

5. Procédé de production de pneumatique selon la revendication 4, dans lequel
    la première feuille de caoutchouc (11) a une épaisseur de 1,0 à 1,5 mm.

6. Procédé de production de pneumatique selon la revendication 4 ou 5, dans lequel
    la seconde feuille de caoutchouc (12) a une épaisseur de 0,8 à 2,0 mm.

7. Procédé de production de pneumatique selon l'une quelconque des revendications 4 à 6, dans lequel

    la seconde feuille de caoutchouc (12) a une portion de chevauchement (12s) dont les portions d'extrémité (12a, 12b) dans une direction circonférentielle du pneumatique sont placées les unes sur les autres, et
    une longueur (L1) dans la direction circonférentielle du pneumatique de la portion de chevauchement (12s) correspond à 30 degrés ou moins autour d'un centre c de rotation du pneumatique vert (1A).

8. Procédé de production de pneumatique selon la revendication 7, dans lequel
    la portion de chevauchement (12s) est située à $\pm 10$ degrés en éloignement d'un point léger du pneumatique (1A) dans la direction circonférentielle du pneumatique.

9. Pneumatique vert non vulcanisé (1A) comprenant une doublure interne (9) s'étendant de manière toroïdale entre une paire de portions de talon (4), et une couche de ceinture (7) disposée à l'extérieur de la doublure interne (9) dans une direction radiale du pneumatique et dans une portion formant bande de roulement (2), dans lequel

    la doublure interne (9) inclut une portion de base (9a) et une paire de portions épaisses (9b) ayant une épaisseur plus grande que celle de la portion de base (9a), et
    **caractérisé en ce que**
    la paire de portions épaisses (9b) est située de manière à ne pas se chevaucher avec la couche de ceinture (7) dans une direction de nappe radiale du pneumatique (F).

Fig. 1

**(a)**

**(b)**

**Fig. 2**

**Fig. 3**

**Fig. 4**

**Fig. 5**

**Fig. 6**

**Fig. 7**

**EP 3 854 573 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H732813 A